Europäisches Patentamt

European Patent Office

Office européen des brevets

(11) Numéro de publication: **0 042 323**
**B1**

(12) **FASCICULE DE BREVET EUROPEEN**

(45) Date de publication du fascicule du brevet: **05.12.84**

(51) Int. Cl.³: **G 21 C 19/06**

(21) Numéro de dépôt: **81400899.1**

(22) Date de dépôt: **05.06.81**

(54) Installation de stockage et/ou de transfert d'assemblages de combustible nucléaire.

(30) Priorité: **13.06.80 FR 8013210**

(43) Date de publication de la demande:
**23.12.81 Bulletin 81/51**

(45) Mention de la délivrance du brevet:
**05.12.84 Bulletin 84/49**

(84) Etats contractants désignés:
**BE DE FR GB IT**

(56) Documents cités:
**DE-A-2 433 225**
**DE-A-2 840 559**
**FR-A-1 513 908**
**FR-A-2 132 407**
**US-A-3 653 485**

(73) Titulaire: **COMMISSARIAT A L'ENERGIE ATOMIQUE Etablissement de Caractère Scientifique Technique et Industriel**
**B.P. 510**
**F-75752 Paris Cedex 15 (FR)**

(72) Inventeur: **Moulin, Maurice**
**9, rue Théodore de Banville**
**F-91120 Palaiseua (FR)**
Inventeur: **Vivien, Jean**
**22, rue Tristan Bernard**
**F-78340 Les Clayes-Sous-Bois (FR)**

(74) Mandataire: **Mongrédien, André et al**
**c/o BREVATOME 25, rue de Ponthieu**
**F-75008 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

## Description

La présente invention se rapporte à une installation de stockage et/ou de transfert d'assemblages de combustible nucléaire. Plus précisément, l'invention concerne de préférence une installation de stockage et/ou de transfert des assemblages combustibles irradiés dans le coeur d'un réacteur nucléaire à neutrons rapides.

On sait que les assemblages combustibles irradiés dans le coeur d'un réacteur nucléaire à neutrons rapides sont disposés dans un étui étanche contenant du sodium liquide dès leur sortie du barillet du réacteur afin que les calories que continue à dissiper le combustible soient évacuées dans des conditions favorables en dépit de l'absence de stockage dans la cuve du réacteur. Une autre solution consiste à transférer les assemblages sous eau ou tout autre liquide (sodium par exemple) après lavage à la sortie du barillet du réacteur. On sait aussi que l'on tend à retraiter le combustible irradié dans des délais aussi courts que possible.

Cependant, il peut être nécessaire de prévoir un stockage provisoire des assemblages combustibles notamment à la suite d'un décalage entre la mise en service du réacteur et celle de l'usine de retraitement. De plus, même lorsque le réacteur et l'usine de retraitement sont tous deux en service, le stockage des assemblages irradiés en attente de retraitement, est pratiquement indispensable en raison de la différence importante entre les cadences de sortie du barillet du réacteur au cours d'une phase de remplacement de combustible irradié et les possibilités de l'usine de retraitement.

L'usine de retraitement n'étant pas en principe implantée sur le site du réacteur, il est possible de stocker le combustible irradié sur le site même du réacteur ou sur le site de l'usine de retraitement. La première solution, qui permet de différer les opérations de transport des assemblages, simplifie les problèmes techniques, ce qui permet de diminuer les coûts de la filière. Pour cette raison, l'installation de stockage selon l'invention sera de préférence implantée sur le site du réacteur. Cependant, cette implantation n'est pas limitative et on comprendra que l'invention vise également le cas où l'installation de stockage est disposée sur le site de l'usine de retraitement.

Ainsi, conformément à l'invention, il est proposé une installation de stockage et/ou de transfert d'assemblages de combustible nucléaire, caractérisée en ce qu'elle comprend une enceinte de stockage définissant au moins un poste de chargement et de déchargement et plusieurs postes de stockage, des modules recevant chacun plusieurs assemblages, chacun de ces modules étant disposé dans l'un des postes définis dans l'enceinte, le nombre des modules étant inférieur à celui des postes, des moyens de sustentation pour créer un coussin fluide en-dessous d'au moins une partie des modules afin de soulever ces derniers à l'intérieur de l'enceinte, des moyens pour déplacer les modules entre les différents postes lorsqu'ils sont soulevés par les moyens de sustentation, et un circuit de fluide réfrigéré, chaque module comprenant une plaque supérieure, des moyens pour supporter les assemblages, une plaque inférieure dont la face inférieure est plane afin de permettre la sustentation du module par les moyens de sustentation, et une virole intermédiaire entourant les assemblages et définissant à proximité de chacune des plaques un passage permettant au fluide réfrigéré de circuler dans ladite virole.

Selon une caractéristique secondaire de l'invention, les postes de chargement et de stockage sont alignés par rangées selon deux directions différentes, les moyens de sustentation agissant indépendamment dans chacune desdites rangées, et les moyens pour déplacer les modules agissant simultanément sur l'ensemble des modules d'une même rangée.

Dans un mode de réalisation particulier de l'invention, les postes de chargement et de stockage sont alignés par rangées selon deux directions orthogonales, l'enceinte de stockage étant alors rectangulaire et les modules de section carrée.

De préférence, des moyens sont prévus pour assurer le guidage des modules lors de leurs déplacements entre les différents postes. Lorsque ces postes sont alignés par rangées, ces moyens de guidage des modules peuvent comprendre des rails de guidage disposés à la périphérie de l'enceinte de stockage et entre certaines desdites rangées, sauf à chacune des extrémités de ces rangées, et des roulettes latérales disposées sur chaque module pour coopérer avec les rails de guidage et avec les modules voisins.

De préférence, les moyens pour déplacer les modules sont constituées par des vérins placés à l'extérieur de l'enceinte au moins à une extrémité d'au moins une partie desdites rangées.

Selon une autre caractéristique secondaire de l'invention, les moyens de sustentation comprennent des tuyauteries parallèles disposées au niveau du sol de l'enceinte et comportant des buses de sustentation uniformément réparties, le tuyauteries étant alimentées par un fluide sous pression tel que du gaz ou du liquide.

On décrira maintenant, à titre d'exemple non limitatif, un mode de réalisation particulier de l'invention en se référant aux dessins annexés dans lesquels:

— la figure 1 est une vue latérale en coupe schématique, montrant l'implantation d'une installation de stockage selon l'invention sur le site d'un réacteur nucléaire à neutrons rapides,

— la figure 2 est une vue en coupe selon un plan horizontal de l'installation de stockage de la figure 1 montrant de façon schématique la disposition des modules à l'intérieur de l'enceinte et leur déplacement à l'intérieur de cette enceinte,

— la figure 3 est une vue en coupe selon la ligne III—III de la figure 2, montrant la partie inférieure de l'installation de stockage, et notamment la coopération des modules entre eux et avec les parois latérales de l'enceinte au moyen de roulettes de guidage,

— la figure 4 est une vue de côté, en coupe partielle, montrant à plus grande échelle l'un des modules de l'installation de stockage des figures 2 et 3, et

— la figure 5 est une vue en coupe selon la ligne V—V de la figure 4.

La manipulation et le stockage des assemblages irradiés extraits d'un réacteur à neutrons rapides nécessitent certaines précautions pour éviter que les aiguilles contenant le combustible ne dépassent les conditions thermiques maximales imposées qui se situent en général au voisinage de quelques centaines de degrés sur gaine. Il faut également tenir compte du fait que la puissance résiduelle d'un assemblage decroît exponentiellement au cours du temps dès sa sortie du réacteur.

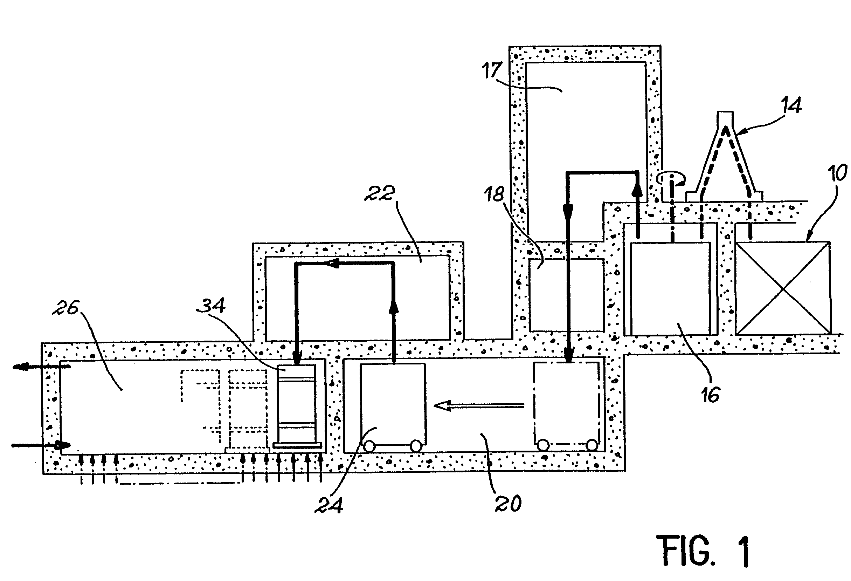

Comme le montre de façon schématique la figure 1, et selon un procédé connu d'extraction des assemblages irradiés, dans un premier temps, on extrait ces assemblages du coeur du réacteur 10 au moyen d'un ringard (non représenté) et on les transporte au moyen d'une hotte de manutention 14 à l'intérieur d'un barillet 16 contenant du sodium liquide comme la cuve du réacteur 10. Rappelons que le sodium est un excellent fluide caloporteur dont la température de fusion et la tension de vapeur faible permettent de réaliser des réservoirs hors pression mais isolés de l'atmosphère par des gaz de couverture inerte 5.

Lorsque le barillet 16 est remplie d'assemblages irradiés, il est nécessaire de le vider afin de permettre le chargement du réacteur en assemblages neufs qui seront transférés dans le coeur 10 en remplacement des assemblages irradiés qui viennent d'être extraits. Dans une réalisation préférentielle représentée sur la figure 1, l'évacuation des assemblages irradiés s'effectue par un couloir de manutention 17 vers une salle de conditionnement 18 dans laquelle les assemblages sont mis en étuis, cette salle étant refroidie par une circulation d'azote. Un couloir de transfert 20 est disposé en partie en dessous de la salle de conditionnement 18 et en partie en dessous d'une salle de manutention 22. Ce couloir de transfert 20 contient une hotte de transfert 24 dans laquelle sont reçus les étuis contenant les assemblages combustibles. Ce couloir de transfert est refroidi par une circulation d'azote ou d'air. La hotte de transfert 24 permet de transporter les assemblages irradiés dans leurs étuis jusqu'à la salle de manutention 22, également refroidie par une circulation d'azote, et dans laquelle on réalise normalement le conditionnement des assemblages combustibles dans les château permettant le transport de ces assemblages jusqu'au site de l'usine de retraitement.

Les différents éléments de l'installation qui vient d'être décrite, ainsi que les opérations qu'ils accomplissent, sont bien connus des spécialistes et ne seront pas décrits plus en détail.

Conformément à la présente invention, la salle de manutention 22 sert uniquement à transférer les assemblages irradiés toujours dans leurs étuis du couloir de transfert 20 jusqu'à une installation de stockage 26 réalisée conformément à l'invention.

Avant de procéder à la description de l'installation de stockage 26, on peut remarquer, d'une part, que cette installation n'est pas nécessairement implantée sur le site du réacteur comme on l'a jéjà mentionné et, d'autre part, que l'implantation de cette installation de stockage sur le site du réacteur pourrait également se faire d'une façon différente, notamment en disposant cette installation de stockage directement en dessous de la salle de conditionnement 18. En effet, le couloir de transfert 20 et la salle de manutention 22 sont destinés en principe au conditionnement des assemblages irradiés dans des châteaux permettant leur transport jusqu'au site de l'usine de retraitement. La disposition de la figure 1 est simplement destinée à permettre l'adaptation de l'installation de stockage 26 sur une installation d'évacuation du combustible irradié existante.

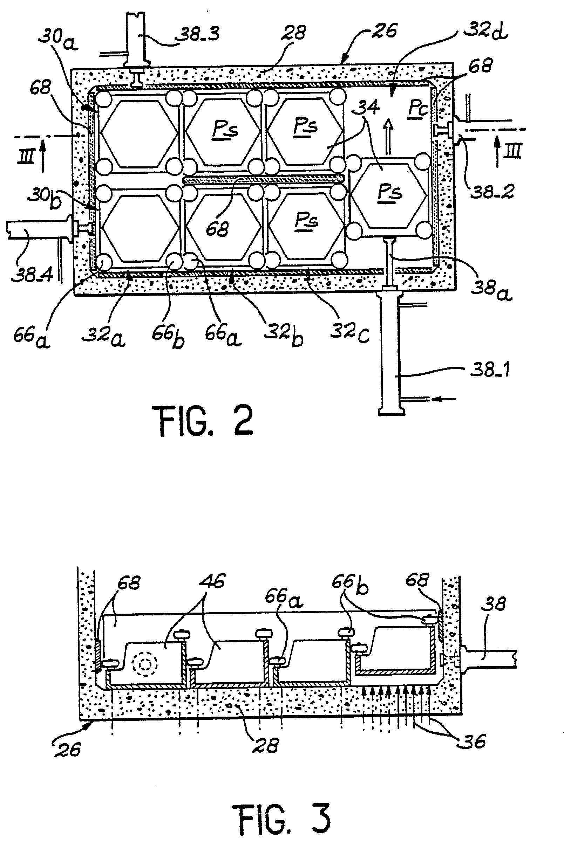

Comme l'illustrent notamment les figures 2 et 3, l'installation de stockage 26 comprend une enceinte de confinement en béton 28 assurant la protection biologique de l'environnement. L'enceinte de confinement 28 se présente sous la forme d'un parallélépipède rectangle définissant en section horizontale, comme le montre la figure 2, un certain nombre de postes $P_s$ et $P_c$ de section carrée qui se répartissent dans une première direction selon deux rangées 30a et 30b de quatre postes et, dans une deuxième direction perpendiculaire à la première, selon quatre rangées 32a, 32b, 32c et 32d de deux postes. Bien entendu, on comprendra par la suite que le nombre de postes de l'installation de stockage peut être différent de celui qui est représenté sur les figures et, notamment, que le nombre des rangées du type des rangées 30 et 32 peut être le même (4 ou 5 par exemple) ou que le nombre de rangées de deux postes du type des rangées 32 peut être supérieur ou inférieur à quatre. De même, la section carrée de chacun des postes n'est pas limitative, la section de ces postes pouvant notamment être rectangulaire ou même en forme de losange ou de parallèlogramme, la section de l'enceinte 28 étant alors également en forme de parallèlogramme.

Le poste $P_c$, défini à l'intersection des rangées 30a et 32d dans la variante représentée, est disposé en dessous d'une trappe (non représentée) formée dans le plafond de l'enceinte et communiquant avec la salle de manutention 22. Ce poste $P_c$ permet donc le chargement et le déchargement de l'installation de stockage 26. Dans une autre variante de réalisation non représentée, le chargement et le déchargement de l'installation de stockage peuvent s'effectuer à deux postes différents disposés tous deux comme le poste $P_c$ en dessous d'une trappe formée dans le plafond de l'enceinte 28 et communiquant avec une salle de manutention appropriée du type de la salle 22. Tous les autres postes définis à l'intérieur de l'enceinte 28 constituent des postes de stockage $P_s$.

Conformément à l'invention, si le nombre total des postes $P_c$ et $P_s$ défini à l'intérieur de l'enceinte 28 est $n$ (8 dans le mode de réalisation représenté), on dispose $n-1$ modules 34 à l'intérieur de l'enceinte de confinement 28. Les modules 34, que l'on décrira plus en détail par la suite, sont tous identiques et chacun d'entre eux occupe normalement l'un des postes $P_s$, le poste $P_c$ étant laissé libre pour le chargement et le déchargement. Bien entendu, le nombre des modules 34 pourrait être inférieur à n-1, certains des postes de stockage $P_s$ étant alors vides. Cependant, on comprendra que la capacité de l'installation de stockage 26 s'en trouve réduite, ce qui n'est évidemment pas souhaitable. Comme on le verra par la suite, chacun des modules 34 est apte à recevoir un certain nombre d'etuis contenant des assemblages combustibles irradiés. Chaque module 34 vide ou rempli peut également être sorti de l'enceinte 28 par la trappe ménagée dans le plafond au-dessus du poste $P_c$. Afin de permettre le chargement et le déchargement des modules en étuis, ainsi que l'extraction et la mise en place des modules si nécessaire, un ringard de manutention (non représenté), d'un type connu, est placé dans la salle de manutention 22 au-dessus de la trappe obturant le poste $P_c$.

Conformément à l'invention, et en raison du fait qu'au moins l'un des postes définis à l'intérieur de l'enceinte 28 est vide, il est possible de déplacer les modules 34 à l'intérieur de cette enceinte de façon à les emmener à tour de rôle au niveau du poste de chargement et de déchargement $P_c$ afin qu'ils puissent recevoir les étuis contenant les assemblages irradiés ou au contraire afin d'évacuer ces assemblages pour qu'ils soient conditionnés dans un château de façon connue lorsque leur transport vers l'usine de retraitement peut être envisagé. Ce déplacement des modules 34 est rendu possible par la présence de moyens de sustentation représentés schématiquement en 36 sur la figure 3 au niveau du sol de l'enceinte 28 et par la présence de moyens pour déplacer les modules entre les différents postes, tels que les vérins 38, aptes à déplacer les modules 34 lorsque ceux-ci sont soulevés par les moyens de sustentation 36.

Bien entendu, les vérins 38 peuvent être remplacés par tout autre moyen permettant d'assurer la manutention des modules entre les différents postes, bien que l'utilisation de vérins présente l'avantage d'autoriser une intervention sur ceux-ci de l'extérieur. Ainsi, des solutions à chaîne de poussée ou d'entraînement par câbles ou chaînes et doigts sont aussi possibles.

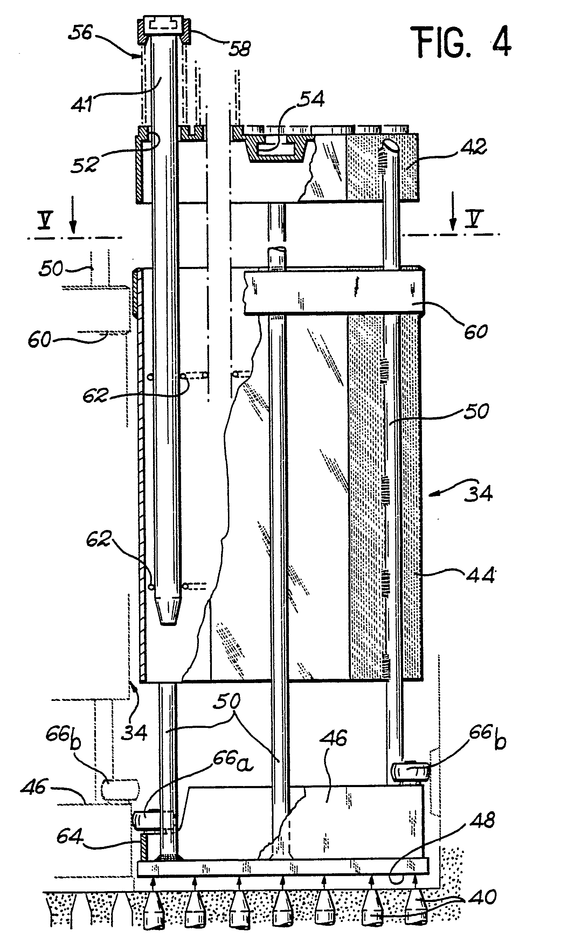

Les moyens de sustentation 36 comprennent un système de tuyauterie (non représenté) qui peut être noyé dans le béton constituant le sol de l'enceinte 28 ou disposé sur le sol lorsque les modules 34 ne reposent pas directement sur celui-ci mais sur des poutres horizontales. Ce système de tuyauterie est constitué par plusieurs ensembles de conduites parallèles disposés, d'une part, en dessous de chacune des rangées 30a et 30b et, d'autre part, en dessous des deux rangées 32a et 32d disposées à la périphérie de l'enceinte 28. Ces tuyauteries sont alimentées par du fluide sous pression qui débouche à l'intérieur de l'enceinte 28 par un grand nombre de gicleurs ou buses de sustentation à axe vertical 40 (figure 4). Afin de permettre une sustentation correcte des modules 34, les gicleurs 40 sont aussi rapprochés que possible. Ainsi, ils sont disposés au pas triangulaire s'ils sont eux-mêmes de forme cylindrique, hexagonale ou triangulaire, ou au contraire au pas carré s'ils sont eux-mêmes carrés. La disposition des gicleurs 40 sur une partie aussi grande que possible de la surface porteuse des modules 34 permet d'assurer une sustentation correcte de ces derniers quelle que soit leur charge.

De préférence, lorsque le fluide utilisé est un gaz, les gicleurs 40 ont la forme de cols soniques. De façon connue, les cols soniques présentent la caractéristique essentielle d'assurer un débit de gaz constant lorsque la pression amont est constante, indépendamment de la pression aval. Dans le cas présent, on comprendra que cette caractéristique est particulièrement intéressante puisqu'elle permet d'assurer une sustentation correcte des modules 34 en dépit du fait que certains des gicleurs 40 ne sont recouverts par aucun module.

De préférence, les ensembles de conduites parallèles du système de tuyauterie 36 assurant la sustentation des modules disposés dans chacune des rangées 30a, 30b, 32a et 32d sont alimentés indépendamment les uns des autres. Cette caractéristique permet, comme le montre la figure 3, de soulever le ou les modules 34 disposé(s) dans la rangée correspondante afin de permettre son (leurs) déplacement(s) au moyen du vérin 38 correspondant, tout en maintenant les autres modules 34 dans les postes $P_s$ ou $P_c$ qu'ils occupent, ces autres modules reposant alors par gravité sur le sol de l'enceinte 28. Le fait de reposer par gravité assure par frottement solidaire un bon maintien latéral des modules en cas de séisme.

Comme le montre notamment la figure 2, on prévoit de préférence quatre vérins ou groupes de vérins 38-1, 38-2, 38-3 et 38-4 qui sont disposés à l'extérieur de l'enceinte de confinement 28 de façon à agir au travers de cette enceinte par leurs tiges de poussée 38a sur le ou les modules 34 qui se trouvent dans chacune des rangées périphériques 30a, 30b, 32a et 32d. De façon plus précise, un vérin ou groupe de vérins 38 est disposé à l'une des extrémités de chacune de ces rangées périphériques, cette extrémité étant choisie de telle sorte que la mise en oeuvre consécutive des vérins de rangées périphériques adjacentes permette de déplacer l'ensemble des modules dans un sens de rotation déterminé à l'intérieur des rangées périphériques. D'autre part, les tiges de poussée 38a de chacun des vérins agissent par poussée, sur le module 34 le plus proche de la rangée correspondante, le mouvement de ce module étant communiqué aux autres modules de la rangée s'il en existe. Dans la variante représentée sur la figure 2, la mise en oeuvre successive des vérins 38-1 à 38-4 permet de déplacer la totalité des modules 34 dans le sens inverse des aiguilles d'une montre à l'intérieur de l'enceinte 28 comme l'illustre la figure 2. Ainsi, la mise en oeuvre du vérin 38-1 permet de déplacer le module 34 disposé dans la rangée 32d dans le sens de la flèche jusqu'au poste de chargement et de déchargement P$_c$. Ce déplacement s'effectue bien entendu après une mise en oeuvre de la partie du circuit de fluide sous pression 36 correspondant à la rangée 32d. La partie du circuit de fluide 36 correspondant à cette rangée 32d est ensuite dépressurisée et la rotation des modules 34 entre les différents postes définis à l'intérieur de l'enceinte 28 se poursuit au moyen du vérin 38-4. La mise en oeuvre de ce verin s'accompagne d'une mise sous pression de la partie du circuit de sustentation de fluide 36 correspondant à la rangée 30b. C'est ensuite le vérin 38-3 qui est mis en oeuvre après mise sous pression de la partie du circuit de sustentation 36 correspondant à la rangée 32a. Enfin, la rotation des modules 34 s'achève par la mise en oeuvre du vérin 38-2 accompagnée d'une mise sous pression de la partir du circuit de sustentation 36 correspondant à la rangée 30a. La totalité du cycle qui vient d'être décrit correspond au déplacement de chacun des modules 34 contenus à l'intérieur de l'enceinte 28 entre deux postes adjacents dans le sens inverse des aiguilles d'une montre. La répétition de ce cycle permet de faire défiler successivement tous les modules 34 dans le poste P$_c$ où ils peuvent être chargés et déchargés à volonté. Il est ainsi possible, en faisant circuler les modules, de contrôler par tout moyen connu (visuel, courants de Foucault, etc.) l'étant des modules stockés au poste unique fixe que constitue ce poste P$_c$.

Bien entendu, les dispositions des vérins 38 pourraient être inversées, chacun des vérins étant alors disposé à l'extrémité opposée de la rangée qui lui correspond, de telle sorte que la rotation des modules 34 à l'intérieur de l'enceinte 28 s'effectuerait alors dans le sens des aiguilles d'une montre.

De plus, le parcours des modules n'est pas limité à l'exemple décrit, bien que celui-ci donne le meilleur coefficient de remplissage. Il peut notamment varier avec la configuration de l'enceinte 28 et du cloisonnement interne de celle-ci.

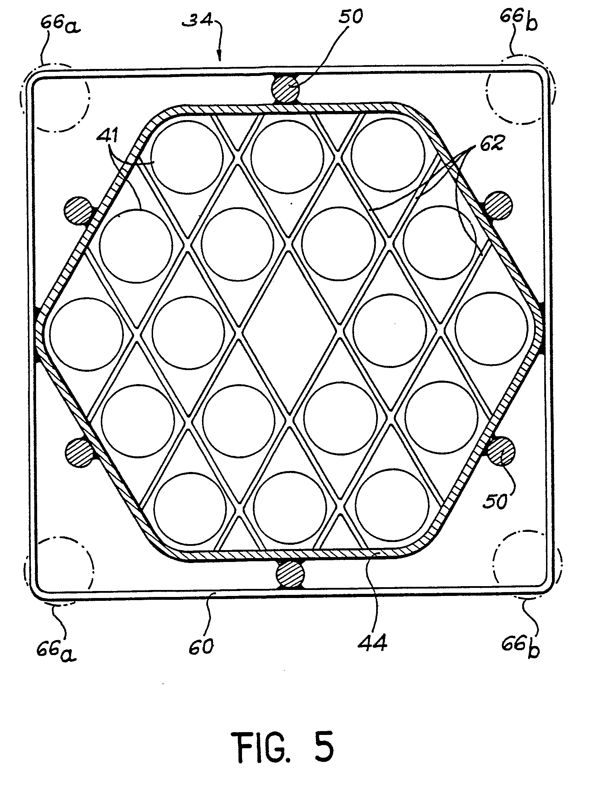

Les modules 34 étant identiques, on décrira en détail l'un de ces modules en se référant aux figures 4 et 5.

Chaque module 34 comprend essentiellement trois parties disposées les unes au-dessus des autres de façon à pouvoir supporter verticalement un certain nombre d'étuis 41 dans lesquels sont logés les assemblages combustibles irradiés. Ainsi, chaque module de stockage 34 comprend en partant du haut une plaque porteuse horizontale nervurée 42 supportant les étuis 41, un élément intermédiaire 44, permettant de canaliser la circulation d'un gaz de refroidissement tel que de l'azote comme on le verra par la suite et d'éviter le balancement des étuis notamment en cas de séisme, et une plaque inférieure horizontale 46 présentant une face inférieure dressée 48 autorisant la sustentation du module 34 au moyen des buses 40. Les trois parties 42, 44 et 46 sont espacées les unes des autres et solidarisées au moyen de six pieds 50 qui sont fixés par exemple par soudure au milieu de chacune des faces de l'élément intermédiaire 44, ce dernier définissant une cheminée ou virole présentant en section une forme hexagonale comme le montre la figure 5. Les extrémités opposées des pieds 50 sont fixées respectivement à la plaque 42 et à la plaque 46, par exemple par soudure.

La plaque porteuse 42 présente elle aussi en vue de dessus une forme hexagonale et ses côtés sont disposés dans le prolongement des faces correspondantes de l'élément intermédiaire 44. La plaque 42 est percée de trous 52 régulièrement répartis selon des directions parallèles à chacun des côtés de l'hexagone, qui permettent le passage des étuis 41. Seul le centre de la plaque 42 n'est pas percé, car il est pourvu d'un logement 54 susceptible de recevoir un système de préhension approprié manoeuvré par un ringard permettant d'introduire les modules 34 à l'intérieur de l'enceinte 28 par la trappe ménagée dans le plafond de celle-ci, ou de les sortir de cette enceinte, comme on l'a indiqué précédemment. A titre indicatif, dans le mode de réalisation représenté sur la figure 5, la plaque porteuse 42 est percée de dix huit trous 52 permettant de recevoir dix huit étuis 41. De plus, la plaque porteuse 42 est munie au-dessus de chacun des trous 52 d'un amortisseur de chute 56 portant à son extrémité supérieure un support 58 auquel est suspendu l'étui 41 correspondant. L'amortisseur 56, constitué par exemple d'un tube perforé, permet de limiter la force de ralentissement de l'étui 41 en limitant la décélération à 10 g en cas de largage accidentel d'un étui chargé.

L'élément intermédiaire en forme de virole ou de cheminée 44 est entouré à sa partie supérieure par un cadre de forme carrée 60 dont le côté correspond pratiquement à l'encombrement maximum du module, c'est-à-dire aux dimensions des postes $P_s$ et $P_c$ définis à l'intérieur de l'enceinte 28. Ce cadre 60 est fixé par soudure à deux pieds 50 et à deux sommets opposés de l'hexagone formé par la virole 44. La virole 44 supporte également à deux niveaux différents des barres entrecroisées 62 disposées parallèlement à certaines des faces de la virole. Ces barres 62 ont pour fonction d'éviter les balancements des étuis 41 en cas de séisme.

La plaque inférieure 46 est munie de rebords périphériques 64 définissant en vue de dessus un carré dont les côtés sont alignés avec les côtés du cadre 60. La plaque inférieure 46 définit ainsi un réservoir étanche capable de recevoir le sodium éventuellement sorti d'un ou plusieurs étuis 41 fuyards. Comme le montrent les figures 3 et 4, dans la variante de réalisation décrite, la plaque 46 est munie de quatre roulettes 66 disposées à chacun de ses angles. Plus précisément, les roulettes 66 disposées aux extrémités de deux côtés opposés du carré défini par la plaque 46 sont situées à deux niveaux différents, de sorte qu'elle seront appelées par la suite roulettes inférieures 66$a$ et roulettes supérieures 66$b$. Les modules 34 sont placés à l'intérieur de l'enceinte 28 de telle sorte que les côtés des modules portant des roulettes de même niveau soient parallèles aux petits côtés du rectangle défini par l'enceinte et que les roulettes en vis-à-vis de deux modules voisins de chacune des rangées 30 soient à deux niveaux différents. Grâce à cette disposition et comme l'illustre notamment la figure 3, sur laquelle on a volontairement augmenté l'échelle dans le sens de la hauteur afin de faciliter la compréhension, les modules 34 d'une même rangée 30 sont en contact les uns avec les autres par l'intermédiaire des roulettes inférieures 66$a$, qui sont en appui contre les rebords 64 de la plaque inférieure 46 du module voisin. Cette structure permet aux roulettes inférieures 66$a$ du module 34 déplacé par le vérin 38-1 de rouler sur les rebords 64 des modules disposés dans la rangée 32$c$ et au rebord 64 du module 34 déplacé par le vérin 38-3, de rouler sur les roulettes inférieures 66$a$ des modules 34 disposés dans la rangée 32$b$ sans que les roulettes supérieures 66$b$ n'entravent ce déplacement, même lorsque les modules 64 sont soulevés par la mise sous pression de la partie correspondante du circuit de sustentation 36.

Des rails de roulement 68 sont également prévus à l'intérieur de l'enceinte 28 pour coopérer avec les roulettes 66 afin de guider les modules 34 dans leur déplacement. Ces rails 68 sont disposés d'une part le long des parois verticales de l'enceinte 28 au niveau des roulettes 66 et, d'autre part, au milieu de l'enceinte 28 entre les rangées 30, sauf au niveau des deux rangées d'extrémité 32$a$ et 32$d$ afin de permettre le déplacement des modules 34 dans ces deux rangées. On comprendra que ces rails 68 sur lesquels roulent les roulettes 66 permettent de guider les modules 34 lorsqu'ils se déplacent entre deux postes $P_s$ ou $P_c$ sous l'action des vérins 38.

Bien entendu, le guidage latéral des modules peut être obtenu par tout autre moyen. Ainsi, on peut utiliser des patins de guidage à la place des roulettes 66, ou encore créer un coussin fluide comparable à celui assurant la sustentation des modules.

Comme on l'a vu, les assemblages combustibles à stocker parviennent dans un temps relativement court dans l'installation de stockage 26 lorsque celle-ci est implantée directement sur le site du réacteur. Il est donc utile de prévoir dans ce cas un circuit de refroidissement permettant d'évacuer les calories qui continuent à être dissipées par les assemblages irradiés.

Conformément à l'invention, ce circuit de refroidissement est un circuit de gaz réfrigéré et, de préférence, d'azote. Pour l'implantation de ce circuit de refroidissement, le local de l'installation de stockage occupe de préférence une position centrale entre deux travées de galeries séparées du local de stockage par des murs dont l'épaisseur de béton assure la protection biologique. Ces travées de galeries permettent, d'une part, la circulation du personnel et, d'autre part, l'implantation des gaines de circulation du gaz de refroidissement. Ce circuit d'azote (non représenté) fonctionne en deux boucles fermées. La première de ces boucles est définie entre l'installation de stockage proprement dite et une batterie d'échangeurs d'un groupe frigorifique au fréon. Ce groupe frigorifique est lui-même en circuit fermé avec son condenseur et définit ainsi la deuxième boucle. Le condenseur échange ses calories avec l'air atmosphérique ou avec un dispositif récupérateur de chaleur. De préférence, l'azote froid pénètre par le bas du local et, notamment, par des ouvertures ménagées dans les murs verticaux de l'enceinte 28 au niveau des espaces définis entre les plaques inférieures 46 et les viroles 44 des modules 34. L'azote froid remonte à l'intérieur des viroles ou cheminées 44 afin de refroidir les assemblages combustibles contenus dans les étuis 41, et ressort par les espaces définis entre les viroles 44 et les plaques support 42 des modules. L'azote chaud s'échappe alors par d'autres ouvertures ménagées par exemple dans le plafond de l'enceinte pour parvenir jusqu'à la batterie d'échangeurs du groupe frigorifique.

Les machines du circuit de refroidissement sont de préférence en surnombre, de telle sorte que toute panne mécanique ou électrique est compensée par la mise en fonction de machines de secours ou par le démarrage de machines productrices d'électricité. Des vannes assurent alors le raccordement de l'installation de stockage sur les machines en fonctionnement et isolent les machines défaillantes.

Grâce à l'installation de stockage 26 dont un mode de réalisation particulier vient d'être décrit en se référant aux figures, on comprendra qu'il est possible de stocker notamment sur le site même du réacteur les assemblages irradiés extraits du coeur du réacteur en faisant défiler successivement un nombre suffisant de modules 34 vides au niveau du poste de chargement $P_c$. Le déplacement des modules est obtenu au moyen des vérins 38 après avoir soulevé les modules 34 à déplacer en mettant sous pression la partie correspondante des moyens de sustentation 36. Chacun des modules 34 qui se présente au niveau du poste de chargement $P_c$ reçoit dans la variante représentée dix huit étuis 41 avant d'être remplacé par un nouveau module vide. Lorsque les assemblages combustibles logés dans leurs étuis doivent être évacués vers l'usine de retraitement, on fait à nouveau défiler les modules 34 chargés au niveau du poste de déchargement $P_c$ afin de retirer les étuis contenant les assemblages par exemple à l'aide d'un ringard muni d'un grappin.

Bien entendu, on comprendra que le nombre des modules 34 et des postes de stockage $P_s$ peut être très différent de l'exemple représenté sur la figure 2. Ce nombre sera choisi principalement en fonction des besoins, c'est-à-dire en tenant compte à la fois de la durée de stockage avant l'envoi des assemblages vers l'usine de retraitement, de l'écart entre deux opérations de chargement du réacteur, du nombre d'assemblages extraits du coeur du réacteur au cours de chacune de ces opérations et du nombre d'assemblages reçus dans chacun des modules. Les dimensions de l'ensemble de stockage 28 restent cependant limitées en fonction de la poussée maximum que peuvent exercer les vérins ou les groupes de vérins 38. Si la capacité de stockage de l'enceinte 28 est insuffisante pour répondre aux besoins, il est possible de disposer côte à côte plusieurs enceintes de stockage du type de l'enceinte 28 comportant une paroi commune et, éventuellement, un poste de chargement unique.

Conformément à un deuxième mode de réalisation de l'invention (non représenté), l'installation assurant le stockage et/ou le transfert des assemblages combustibles irradiés peut être constituée par une piscine remplie d'un liquide tel que de l'eau ou du sodium. L'installation est alors très voisine de celle qui vient d'être décrite en se référant aux figures annexées, comme le fait apparaître la description succincte qui va suivre.

Comme dans le mode de réalisation précédent, les assemblages extraits du coeur du réacteur sont transférés dans un barillet sous sodium. Après décroissance partielle de leur puissance résiduelle, les assemblages sont repris dans le barillet par des moyens de manutention placés dans un couloir de manutention du type du couloir 17 sur la figure 1. Ils sont alors introduits dans un poste de lavage où ils sont débarrassés des traces de sodium déposé sur leur structure, puis rincés. Une solution avantageuse consiste à se servir de l'installation de lavage comme sas entre le couloir de manutention, pollué par le sodium, et la partie sous eau de l'installation. Les assemblages sont évacués de l'installation de lavage par l'extrémité inférieure de celle-ci. Ils sont alors soit placés dans un engin assurant leur transfert vers la piscine, soit introduits directement dans celle-ci si elle peut être installée à cet endroit.

Contrairement au premier mode réalisation, les assemblages sont donc introduits dans les modules sans étui. Il en résulte une légère modification des modules leur permettant de supporter les assemblages non plus par la tête mais par l'épaulement inférieur constituant le pied, sur une grille support avec interposition d'un amortisseur de chute. Les grilles antisismiques sont alors situées vers le haut des modules pour assurer le guidage des assemblages lors de leur sortie.

Par ailleurs, la fonction des modules et leur arrangement à l'intérieur de l'installation de stockage sont identiques à la fonction et à l'arrangement des modules de stockage en milieu gazeux décrits précédemment.

Bien entendu, la disposition des modules dans un liquide tel que de l'eau ou du sodium liquide ne permet pas d'avoir recours à des moyens de sustentation créant un coussin de gaz en dessous des modules. Ce coussin de gaz est remplacé par un coussin liquide créé au moyen d'injecteurs (par exemple à eau) placés sur le fond de la piscine et reliés à une canalisation d'alimentation pouvant notamment prélever de l'eau dans la partie supérieure de la piscine, la mise en pression étant obtenue au moyen d'une pompe extérieure à la piscine ou noyée.

Comme dans le premier mode de réalisation, les moyens de manutention peuvent être constitués par des vérins disposés de façon à pouvoir être dépannés ou remplacés de l'extérieur de la piscine. Par souci d'homogénéité, ces vérins sont de préférence commandés à l'eau.

L'évacuation de la chaleur cédée par les assemblages à l'eau de la piscine s'effectue de façon classique vers un circuit secondaire par l'intermédiaire d'un échangeur eau-eau. Cette chaleur peut être évacuée à l'atmosphère par un réfrigérant atmosphérique, ou encore récupérée pour servir au chauffage d'une installation extérieure (serre, etc.).

Bien que les deux modes de réalisation qui viennent d'être décrits concernent une installation de stockage d'éléments combustibles irradiés, on comprendra que l'invention n'est pas limitée à ce type d'installation. Ainsi, l'invention peut également être apliquée à une installation de transfert. De même, l'invention peut également être appliquée à des produits différents des assemblages combustibles irradiés, tels que des produits présentant un danger d'irradiation (déchets actifs, matières premières actives, sources), des produits de contamination chimique (plutonium, effluents liquides).

**Revendications**

1. Installation de stockage et/ou de transfert d'assemblages de combustible nucléaire, caractérisée en ce qu'elle comprend une enceinte de stockage (28) définissant au moins un poste de chargement et de déchargement ($P_c$) et plusieurs postes de stockage ($P_s$), des modules (34) recevant chacun plusieurs assemblages, chacun des modules étant disposé dans l'un des postes définis dans l'enceinte, le nombre des modules (34) étant inférieur à celui des postes ($P_s$, $P_c$), des moyens de sustentation (36) pour créer un coussin fluide en dessous d'au moins une partie des modules afin de soulever ces derniers à l'intérieur de l'enceinte, des moyens (38) pour déplacer les modules entre les différents postes lorsqu'ils sont soulevés par les moyens de sustentation (36), et un circuit de fluide réfrigéré, chaque module (34) comprenant une plaque supérieure (42), des moyens (42, 56) pour supporter les assemblages, une plaque inférieure (46) dont la face inférieure est plane afin de permettre la sustentation du module par les moyens de sustentation (36), et une virole intermédiaire (44) entourant les assemblages et définissant à proximité de chacune des plaques un passage permettant au fluide réfrigéré de circuler dans ladite virole.

2. Installation selon la revendication 1, caractérisée en ce que les postes de chargement ($P_c$) et de stockage ($P_s$) sont alignés par rangées (30, 32) selon deux directions différentes, en ce que les moyens de sustentation (36) agissent indépendamment dans chacune desdites rangées et en ce que les moyens (38) pour déplacer les modules agissent simultanément sur l'ensemble des modules (34) d'une même rangée.

3. Installation selon la revendication 2, caractérisée en ce que les postes de chargement ($P_c$) et de stockage ($P_s$) sont alignés par rangées (30a, 30b, 32a, 32b, 32c, 32d) selon deux directions orthogonales, l'enceinte de stockage (28) étant alors rectangulaire et les modules (34) de section carrée.

4. Installation selon l'une quelconque des revendications précédentes, caractérisée en ce que des moyens sont prévus pour assurer le guidage des modules lors de leurs déplacements entre les différents postes.

5. Installation selon la revendication 4, prise en combinaison avec l'une quelconque des revendications 2 ou 3, caractérisée en ce que les moyens de guidage des modules comprennent des rails de guidage (68) disposés à la périphérie de l'enceinte de stockage et entre certaines desdites rangées (30a, 30b), sauf à chacune des extrémités de ces rangées et des roulettes latérales (66) disposées sur chaque module pour coopérer avec les rails de guidage et avec les modules voisins.

6. Installation selon la revendication 5, caractérisée en ce que chaque module (34) est équipé de quatre roulettes (66) disposées aux quatre coins du carré qu'il définit en section, deux des roulettes (66a) adjacentes à un même côté du carré étant disposées dans un plan horizontal décalé par rapport aux deux autres roulettes (66b).

7. Installation selon l'une quelconque des revendications 5 ou 6, caractérisée en ce que les roulettes (66) sont portées par la plaque inférieure (46).

8. Installation selon l'une quelconque des revendications précédentes, caractérisée en ce que les moyens pour supporter les assemblages comprennent un système amortisseur de chute (56) pour chacun des assemblages.

9. Installation selon l'une quelconque des revendications précédentes, caractérisée en ce que la plaque supérieure (42) est munie en son centre de moyens de préhension (54) permettant la manipulation du module (34) par une trappe disposée dans le plafond de l'enceinte au niveau du poste de chargement et de déchargement ($P_c$).

10. Installation selon l'une quelconque des revendications précédentes, caractérisée en ce que la virole intermédiaire (44) porte des barres entrecroisées (62) évitant le balancement des assemblages.

11. Installation selon l'une quelconque des revendications précédentes, caractérisée en ce que la plaque inférieure (46) est munie de rebords (64) qui définissente un réservoir sur sa face supérieure.

12. Installation selon l'une quelconque des revendications précédentes, caractérisée en ce que les moyens pour déplacer les modules sont constitués par des vérins (38) placés à l'extérieur de l'enceinte (28) au moins à une extrémité d'au moins une partie desdites rangées (30a, 30b, 32a, 32d).

13. Installation selon l'une quelconque des revendications précédentes, caractérisée en ce que les moyens de sustentation (36) comprennent des tuyauteries parallèles disposées au niveau de sol de l'enceinte (28) et comportant des buses de sustentation (40) uniformément réparties, les tuyauteries étant alimentées par un fluide sous pression.

**Patentansprüche**

1. Einrichtung zur Lagerung und/oder zum Transport von Kernbrennelementen, dadurch gekennzeichnet, daß sie eine Lagerkammer (28) aufweist, welche wenigstens eine Lade- und Entladestation (Pc) und eine Anzahl von Lagerstationen (Ps) umfaßt, daß Behälter (34) für die Aufnahme jeweils von einer Anzahl Kernbrennelemente vorgesehen sird, von denen jeder Behälter in einer der in der Kammer vorhandenen Stationen angeordnet ist, wobei die Anzahl der Behälter (34) kleiner ist als die der Stationen (Ps, Pc), daß Trageinrichtungen (36) vorgesehen sind, mittels welcher ein Fluidkissen unter wenigstens einem Teil der Behälter erzeugbar ist, um die Letzteren im Inneren der Kammer anzuheben, daß ferner Einrichtungen (38) zum Versetzen der von den Trageinrichtungen (36) angehobenen Behälter zwischen den verschiedenen Stationen vorgesehen sind und daß ein Umwälzkreis für ein gekühltes Fluid vorhanden ist, wobei jeder Behälter (34) eine obere Platte (42), Einrichtungen (42, 56) zum Halten der Elemente, eine untere Platte (46), deren Unterseite eben ist, um das Anheben des Behälters mittels der Trageinrichtungen (36) zu ermöglichen, und einen die Elemente umgebenden Zwischenmantel (44) aufweist, welcher zunächst jeder der Platten einen Durchlaß für die Umwälzung des gekühlten Fluids in dem genannten Mantel aufweist.

2. Einrichtung nach Anspruch 1, dadurch gekennzeichnet, daß die Ladestationen (Pc) und die Lagerstationen (Ps) entlang in zwei verschiedenen Richtungen verlaufenden Reihen (30, 32) ausgerichtet sind, daß die Trageinrichtungen (36) unabhängig in jeder der Reihen wirksam sind und daß die Einrichtungen (38) zum Versetzen der Behälter gleichzeitig auf alle Behälter (34) einer Reihe einwirken.

3. Einrichtung nach Anspruch 2, dadurch gekennzeichnet, daß die Ladestationen (Pc) und die Lagerstationen (Ps) entlang in zwei zueinander rechtwinkligen Richtungen verlaufenden Reihen (30a, 30b, 32a, 32b, 32c, 32d) ausgerichtet sind, daß die Lagerkammer (28) somit rechtwinklig ist und die Behälter (34) quadratischen Querschnitt haben.

4. Einrichtung nach einem der vorstehenden Ansprüche, dadurch gekennzeichnet, daß Einrichtungen für die Führung der Behälter beim Versetzen derselben zwischen den verschiedenen Stationen vorgesehen sind.

5. Einrichtung nach Anspruch 4 in Verbindung mit einem der Ansprüche 2 oder 3, dadurch gekennzeichnet, daß die Einrichtungen für die Führung der Behälter Führungsschienen (68) aufweisen, welche am Umfang der Lagerkammer sowie zwischen Bestimmten der genannten Reihen (30a, 30b) angeordnet sind, mit Ausnahme der Enden dieser Reihen, und daß an jedem Behälter angebrachte seitliche Rollen (66) mit den Führungsschienen und mit den jeweils benachbarten Behältern zusammenwirken.

6. Einrichtung nach Anspruch 5, dadurch gekennzeichnet, daß jeder Behälter (34) mit vier Rollen (66) bestückt ist, welche an den vier Ecken seines quadratischen Querschnitts angeordnet sind, wobei zwei an einer Seite des Quadrats angeordnete Rollen (66a) in einer gegenüber den anderen beiden Rollen (66b) versetzten waagerechten Ebene angeordnet sind.

7. Einrichtung nach Anspruch 5 oder 6, dadurch gekennzeichnet, daß die Rollen (66) von der unteren Platte (46) getragen sind.

8. Einrichtung nach einem der vorstehenden Ansprüche, dadurch gekennzeichnet, daß die Einrichtungen zum Halten der Elemente ein Stoßdämpfersystem (56) für jedes der Elemente aufweisen.

9. Einrichtung nach einem der vorstehenden Ansprüche, dadurch gekennzeichnet, daß die obere Platte (42) in ihrer Mitte mit Angriffseinrichtungen (54) versehen ist, welche den Umschlag des Behälters (34) durch eine im Bereich der Lade- und Entladestation in der Decke der Lagerkammer (28) vorhandene Falltür hindurch ermöglichen.

10. Einrichtung nach einem der vorstehenden Ansprüche, dadurch gekennzeichnet, daß der Zwischenmantel (44) einander überkreuzende Stäbe (62) trägt, welche das Umkippen der Elemente verhindern.

11. Einrichtung nach einem der vorstehenden Ansprüche, dadurch gekennzeichnet, daß die untere Platte (46) mit aufgestellten Rändern (64) versehen ist, welche an ihrer Oberseite einen Behälter umgrenzen.

12. Einrichtung nach einem der vorstehenden Ansprüche, dadurch gekennzeichnet, daß die Einrichtungen zum Versetzen der Behälter durch Druckstempel (38) gebildet sind, welche wenigstens an einem Ende wenigstens eines Teils der genannten Reihen (30a, 30b, 32a, 32d) außerhalb der Kammer (28) angeordnet sind.

13. Einrichtung nach wenigstens einem der vorstehenden Ansprüche, dadurch gekennzeichnet, daß die Trageinrichtungen (36) in Höhe des Bodens der Kammer (28) parallel zueinander angeordnete Rohrleitungen aufweisen, welche in gleichmäßiger Verteilung mit Hubdüsen (40) versehen und mit einem unter Druck stehenden Fluid gespeist sind.

**Claims**

1. Installation for the storage and/or transport of nuclear fuel assemblies, characterized in that it comprises a storage enclosure (28) with at least one loading/unloading station ($P_c$) and a plurality of storage stations ($P_s$), modules (34) each adapted to receive a plurality of assemblies, each of the modules being located in one of the stations defined within the enclosure, and the number of modules being less than that of the stations ($P_s$, $P_c$), support means (36) to produce a fluid cushion under at least one part of the modules, whereby to raise the latter in the interior of the enclosure, means (38) for moving the modules between the different stations while they are raised by the support means (36), and a refrigerated fluid circuit, each module (34) comprising an upper plate (42), means (42, 56) for supporting the assemblies, a lower plate (46) whose bottom face is flat whereby to permit support of the module by the support means (36), and an intermediate shroud (44) surrounding the assemblies, and defining near each of the plates, a passage permitting refrigerated fluid to circulate within said shroud.

2. Installation according to claim 1, characterized in that the loading stations ($P_c$) and storage stations ($P_s$) are aligned in ranks (30, 32) along two different directions, and in that the support means (36) act independently in each of said ranks, and in that the means (38) for moving the modules act simultaneously on all the modules (34) within the same rank.

3. Installation according to claim 2, characterized in that the loading stations ($P_c$) and storage stations ($P_s$) are aligned in ranks (30a, 30b, 32a, 32b, 32c, 32d) in two orthogonal directions, whereby the storage enclosure (28) is rectangular and the modules (34) have a square section.

4. Installation according to any one of the preceding claims, characterized in that it possesses means for guiding the modules during displacement thereof between the different stations.

5. Installation according to claim 4, taken in combination with either of claims 2 and 3, characterized in that the guide means for the modules comprise guide rails (68) located on the periphery of the storage enclosure and between some of the ranks, except at each end of said ranks, and lateral rollers (66) located on each module to cooperate with the guide rails and with adjacent modules.

6. Installation according to claim 5, characterized in that each module (34) has four rollers (66) located at the four corners of the square which it defines in cross-section, two rollers (66a) on one side of the square being located in a different horizontal plane from the other two rollers (66b).

7. Installation according to either of claims 5 and 6, characterized in that the rollers (66) are carried on the lower plate (46).

8. Installation according to any one of the preceding claims, characterized in that the means for supporting the assemblies comprise a shock-absorbing system (56) for each of the assemblies.

9. Installation according to any one of the preceding claims, characterized in that the upper plate (42) has gripping means (54) at its centre permitting manipulation of the module through a trap in the ceiling of the enclosure located above the loading/unloading station ($P_c$).

10. Installation according to any one of the preceding claims, characterized in that the intermediate shroud (44) has intersecting bars (62) to prevent swaying of the assemblies.

11. Installation according to any one of the preceding claims, characterized in that the lower plate (46) has raised edges (64) defining a reservoir on its upper surface.

12. Installation according to any one of the preceding claims, characterized in that the means for moving the modules comprise rams (38) located externally of the enclosure (28) at one end at least, of one part at least of said ranks (30a, 30b, 32a, 32d).

13. Installation according to any one of the preceding claims, characterized in that the support means (36) comprise parallel pipes located at floor level in the enclosure (28) and having uniformly-distributed lifting nozzles (40), the pipes being fed with a pressurized fluid.

FIG. 1

FIG. 2

FIG. 3

0 042 323

FIG. 4

FIG. 5

4